# EUROPÄISCHE PATENTANMELDUNG

(11) **EP 1 820 688 A2**
(43) Veröffentlichungstag der Anmeldung: **22.08.2007**
(21) Anmeldenummer: 07002880.8
(22) Anmeldetag: 10.02.2007
(51) Int. Cl.: B60N 2/39

(54) **Verfahren und Vorrichtung zum Personenschutz an einem Fahrzeug, insbesondere an einem Fahrschulfahrzeug**

(30) Priorität: 17.02.2006 DE 102006007368
(71) Anmelder: Krauss-Maffei Wegmann GmbH & Co. KG, 80997 München (DE)
(72) Erfinder: Keil, Oswald, 85253 Kleinberghofen (DE)
(74) Vertreter: Feder, Wolf-Dietrich

(57) **Zusammenfassung**

Verfahren und Vorrichtung zum Personenschutz an einem Fahrzeug, insbesondere an einem Fahrschulfahrzeug, mit einer festen Fahrzeugstruktur und einem auf die Fahrzeugstruktur aufgesetzten Aufbau, in dem sich mindestens ein Sitz (4, 8) befindet, wobei der Neigungswinkel des Fahrzeugs gemessen wird und der Sitz in Richtung des Inneren der festen Fahrzeugstruktur bewegt wird, wenn der Neigungswinkel einen vorgegebenen Schwellwert überschreitet.

## Beschreibung

Die Erfindung betrifft ein Verfahren zum Personenschutz an einem Fahrzeug mit den Merkmalen aus dem Oberbegriff des Patentanspruchs 1 und eine Vorrichtung mit den Merkmalen aus dem Oberbegriff des Patentanspruchs 3.

Die Erfindung findet Einsatz an Fahrzeugen, insbesondere an Militärfahrzeugen, welche eine feste Fahrzeugstruktur aufweisen, auf welche ein Aufsatz aufgebracht ist, in welchem sich mindestens ein Sitz zumindest teilweise befindet. Der Aufsatz kann beispielsweise deswegen auf die feste Fahrzeugstruktur aufgebracht worden sein, um das Fahrzeug für den Fahrschulbetrieb auszugestalten. In diesem Fall kann ein Fahrlehrer in erhöhter Position sitzen, von welcher er einen guten Überblick über die Umgebung hat. Der Fahrschüler sitzt im Inneren der festen Fahrzeugstruktur.

Wenn das Fahrzeug über eine schiefe Ebene fährt, besteht die Gefahr, dass es umkippt und sich überschlägt. In diesem Fall müssen die Personen, welche in dem Aufsatz sitzen, geschützt werden. Des Weiteren soll das Fahrzeug so wenig wie möglich Schaden nehmen. Die Personen, welche sich innerhalb der festen Fahrzeugstruktur befinden, sind durch diese Fahrzeugstruktur geschützt.

Es ist möglich, einen Überrollbügel über den Aufsatz anzuordnen. Diese Ausgestaltung hat allerdings den Nachteil, dass der Schwerpunkt des Fahrzeugs nach oben verlagert wird. Insbesondere im Falle eines gepanzerten Militärfahrzeugs muss ein solcher Überrollbügel eine hohe Masse aufweisen, wodurch ferner die Fahreigenschaften des Fahrzeugs negativ beeinflusst werden.

Eine weitere Möglichkeit liegt darin, den Aufsatz mit zusätzlichen Versteifungen zu versehen oder aus einem harten Material (z.B. Stahl-Grauguss) herzustellen. Die Nachteile werden hierdurch jedoch nicht behoben.

Die Aufgabe der Erfindung besteht darin, die Personen, die sich innerhalb des Aufsatzes befinden, im Falle eines Umkippens des Fahrzeugs zu schützen.

Die Erfindung löst die Aufgabe verfahrensmäßig mit den Merkmalen aus dem kennzeichnenden Teil des Patentanspruchs 1 und vorrichtungsmäßig mit den Merkmalen aus dem kennzeichnenden Teil des Patentanspruchs 3. Vorteilhafte Weiterbildungen sind in den abhängigen Ansprüchen beschrieben.

Ein Grundgedanke der Erfindung liegt darin, dass der oder die Sitze, auf welchen die Personen in dem Aufsatz sitzen, ins Innere der festen Fahrzeugstruktur bewegt werden, sobald die Neigung des Fahrzeug einen vorgegeben Schwellwert überschreitet. Aus diesem Grund wird der Neigungswinkel über Neigungswinkelerfassungsmittel überwacht. Der Wert des Neigungswinkels wird einer Steuerelektronik zugeführt, welche veranlasst, dass der oder die Sitze mittels Bewegungsmitteln nach unten ins Innere der Fahrzeugstruktur bewegt werden, wenn der Neigungswinkel den vorgegebenen Schwellwert überschreitet. Der Bewegungsvorgang sollte abgeschlossen sein, wenn das Fahrzeug umgekippt ist. Die Geschwindigkeit der Bewegung kann zu Beginn der Bewegung zunehmen und gegen Ende der Bewegung abnehmen. Der Verlauf der Geschwindigkeit kann mittels einer Steuerelektronik gesteuert werden. Das gezielte Abbremsen gegen Ende der Bewegung schützt die Personen vor Verletzungen, die ansonsten bei einer abrupten Abbremsung entstehen könnten. Zudem können stoßdämpfende Elemente vorgesehen werden.

Für die Erfassung des Neigungswinkels werden Neigungserfassungsmittel verwendet, welche an sich bekannt sind (siehe z.B. DE 198 43 163 A1, EP 1 414 028 A2, DE 298 05 779 U1)

In einer vorteilhaften Ausgestaltung umfassen die Bewegungs-Mittel mindestens eine Konstruktion nach dem Scherenprinzip, welche elektrisch oder von einem insbesondere hydraulisch oder pneumatisch betriebenen Zylinder, angetrieben werden kann.

Der mindestens eine Sitz kann auf einer Plattform angeordnet sein, welche von den Bewegungs-Mitteln bewegt wird. Dies ist insbesondere dann vorteilhaft, wenn mehrere Sitze auf der Plattform montiert sind.

In einer weiter vorteilhaften Ausgestaltung umfassen die Bewegungs-Mittel mindestens einen elektrischen Linearantrieb, dessen Bewegung besonders gut gesteuert werden kann. Falls eine Plattform verwendet wird, kann jede Ecke der Plattform mit jeweils einem Linearantrieb verbunden sein. Die Linearantriebe können sich innerhalb der festen Fahrzeugstruktur abstützen.

Damit nicht nur der Sitz sondern auch die darauf sitzende Person ins Innere der festen Fahrzeugstruktur bewegt wird, sollte diese fest am Sitz angeschnallt sei. Vorteilhafterweise kann hierfür ein Vier-Punkt-Gurtsystem (auch: Hosenträgergurt) verwendet werden.

Mögliche Ausführungsbeispiele der Erfindung sind in den Figuren 1 bis 8 beschrieben.

Es zeigen:
- Fig. 1: ein Fahrzeug in einer Seitenansicht
- Fig. 2: einen Ausschnitt des Fahrzeugs in einer Schnittansicht
- Fig. 3: eine Vorrichtung zum Personenschutz im Fahrzeug in einer schematischen Darstellung
- Fig. 3a: die Vorrichtung gem. Fig. 3 in einer perspektivischen Darstellung
- Fig. 4: eine weitere Vorrichtung zum Personenschutz im Fahrzeug in einer schematischen Darstellung
- Fig. 5: das Fahrzeug im umkippenden Zustand in einer schematischen Darstellung zu einem Zeitpunkt t₁
- Fig. 6: das Fahrzeug im umkippenden Zustand in einer schematischen Darstellung zu einem Zeitpunkt t₂ > t₁
- Fig. 7: ein Blockschaltbild des Verfahrens bei Verwendung von elektrischen Linearantrieben
- Fig. 8: ein Blockschaltbild des Verfahrens bei Verwendung einer Hydraulikeinheit

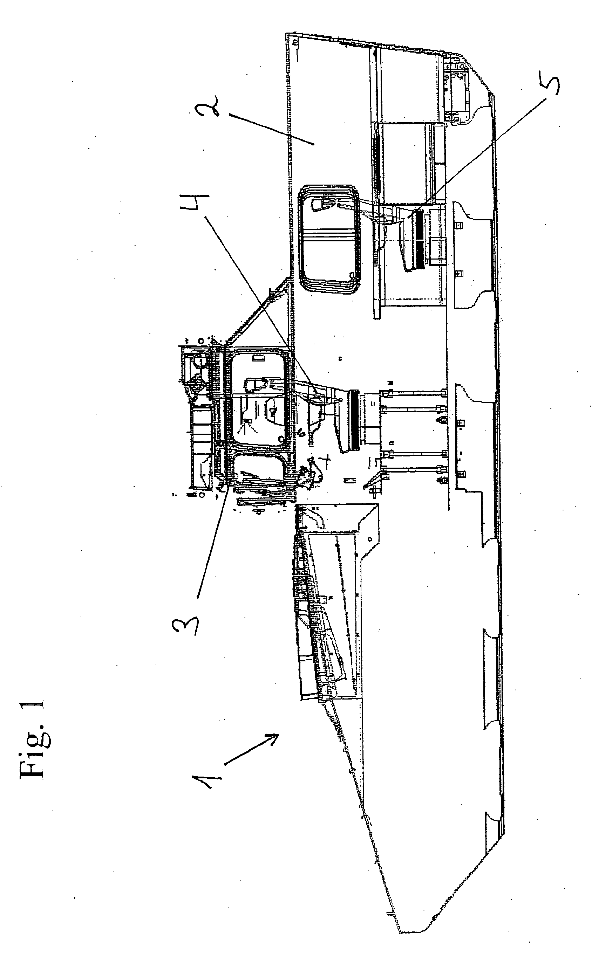

Fig. 1 zeigt ein gepanzertes, militärisches Fahrzeug 1, welches als Fahrschulfahrzeug ausgestaltet ist, in einer Seitenansicht. Das Fahrzeug 1 weist eine feste Fahrzeugstruktur 2 auf, auf die ein Aufsatz 3 aufgebracht ist. Im Bereich des Aufsatzes 3 ist im Gefechtseinsatz des Fahrzeugs ein Geschützturm auf der festen Fahrzeugstruktur 2 montiert. Der Fahrschüler sitzt an einem nicht dargestellten Fahrerplatz im vorderen Bereich des Fahrzeugs 1. Der Fahrlehrer sitzt während der Fahrt auf einem Sitz 4, der sich teilweise innerhalb des Aufsatzes 3 befindet. Das Fahrzeug weist noch weitere Transport-Sitze 5 im Inneren der festen Fahrzeugstruktur auf, um weitere Personen mit dem Fahrzeug befördern zu können.

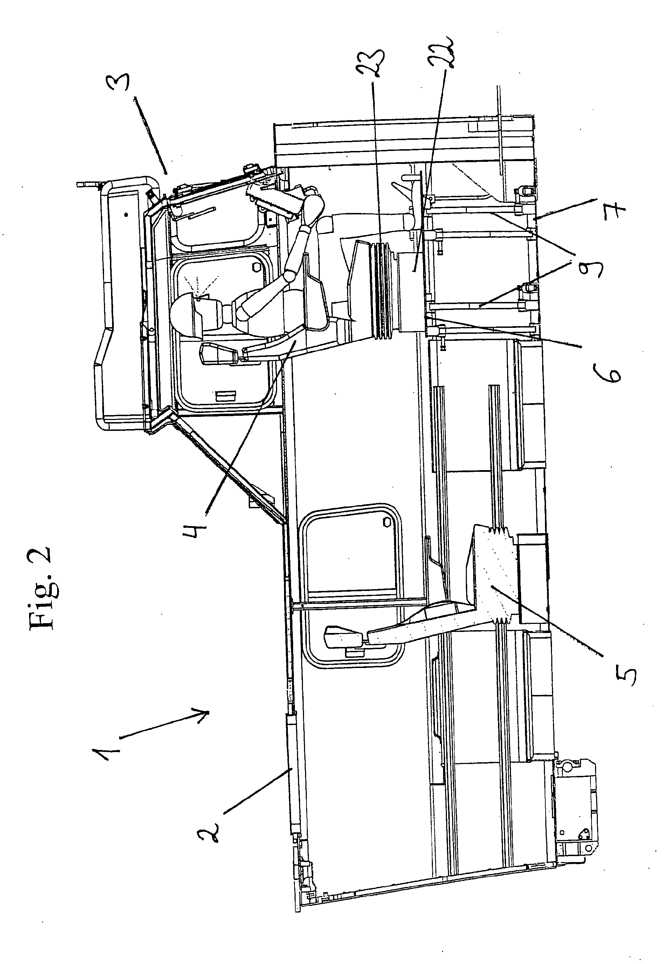

Fig. 2 zeigt einen Ausschnitt des Fahrzeugs 1 aus Fig. 1 mit der festen Fahrzeugstruktur 2 und dem Aufsatz 3 in einer Schnittansicht. Der Sitz 4, auf dem der Fahrlehrer sitzt, ist über eine Sitzkonsole 22 auf einer Plattform 6 montiert, welche über Bewegungsmittel 9 mit der Fahrzeugwanne 7 verbunden ist. Der Sitz ist mit einem nicht dargestellten federgedämpften Schwingsystem 23 ausgestattet. Es wird deutlich, dass der Fahrlehrer, der auf dem Sitz 4 sitzt, bei einem Überschlag des Fahrzeugs einer größeren Gefährdung ausgesetzt ist, als eine Person, welche beispielsweise auf dem Sitz 5 sitzt, da diese durch die feste Fahrzeugstruktur geschützt ist. Insbesondere der Oberkörper und Kopfbereich des Fahrlehrers ist einer Gefährdung ausgesetzt.

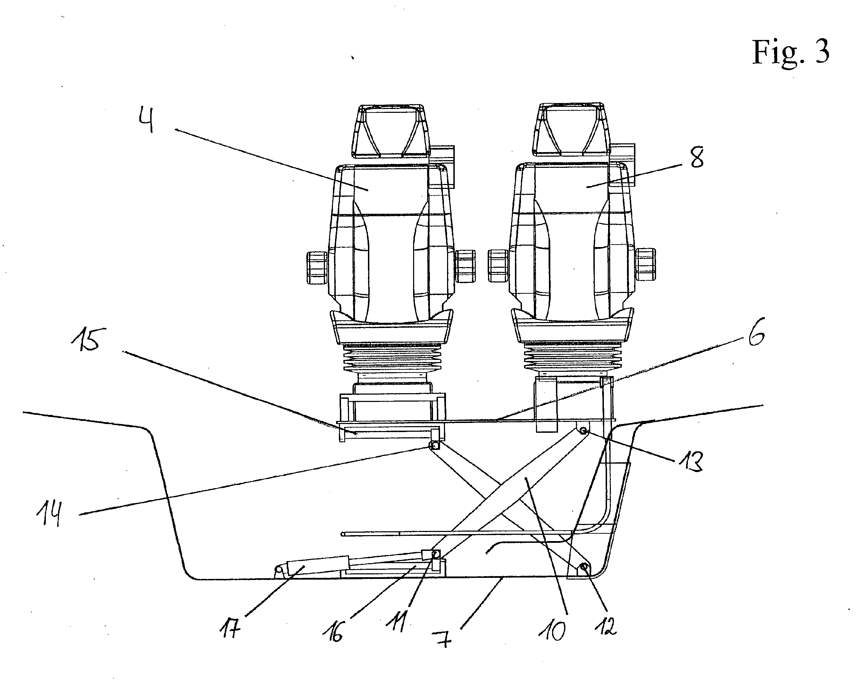

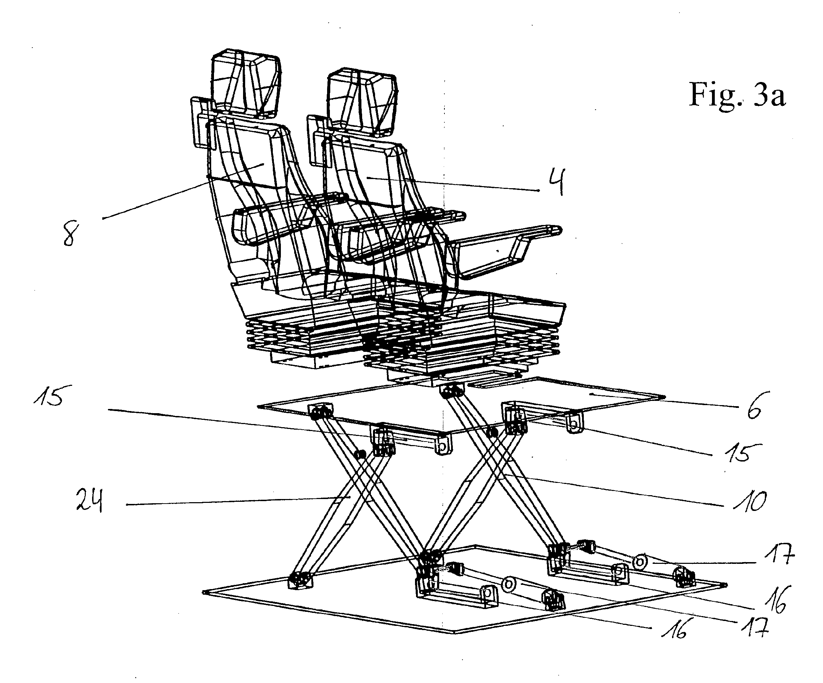

Die Fig.3 und 3a zeigen eine erste Ausführungsart einer Vorrichtung zum Personenschutz im Fahrzeug 1 nach Fig. 1. Auf der Plattform 6 sind zwei Sitze 4 und 8 montiert. Die Plattform 6 ist über zwei hintereinander angeordnete baugleiche Konstruktionen 10 und 24 nach dem Scherenprinzip mit der Fahrzeugwanne 7 verbunden. An jeder Schere ist ein unteres 12 und ein oberes Lager 13 drehbar ausgeführt. Die beiden anderen Lagerungen 11 und 14 sind drehbar und zusätzlich auf einer Führung 15 bzw. 16 verschiebbar. Die beiden hintereinander angeordneten Konstruktionen 10 und 24 nach dem Scherenprinzip werden mittels hydraulisch betriebener Zylinder 17 bewegt. Im Falle des Umkippens des Fahrzeugs wird die Plattform 6 über die Konstruktionen 10 und 24 mittels der Zylinder 17 nach unten ins Innere der festen Fahrzeugstruktur 2 bewegt. In einer nicht dargestellten Ausführungsart sind die Konstruktionen nach dem Scherenprinzip miteinander gekoppelt und werden mittels eines Zylinders gemeinsam bewegt.

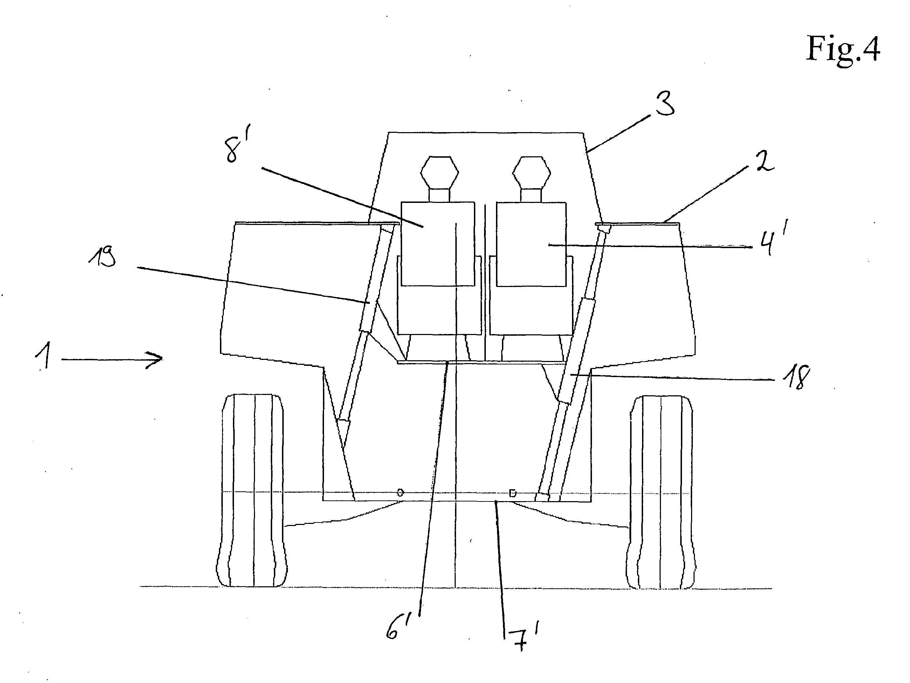

Fig. 4 zeigt eine zweite Ausführungsart einer Vorrichtung zum Personenschutz im Fahrzeug 1 nach Fig. 1 in einer schematischen Darstellung. Die beiden Sitze 4' und 8', die sich teilweise im Aufsatz 3 befinden, sind wiederum auf der Plattform 6' montiert. Die Plattform 6' ist an den Ecken über elektrische Linearantriebe 18 und 19 als Bewegungsmittel mit der Fahrzeugwanne 7 des Fahrzeugs 1 verbunden. Zwei weitere nicht dargestellte Linearantriebe 25 und 26 sind hinter den Linearantrieben 18 und 19 angeordnet und mit den übrigen Ecken der Plattform 6 verbunden. Die Linearantriebe 18 und 19 sowie 25 und 26 (nicht sichtbar) sind an beiden Enden mit der festen Fahrzeugstruktur verbunden. Im Falle des Umkippens des Fahrzeugs 1 wird die Plattform 6 über die Linearantriebe 18 und 19 sowie 25 und 26 (nicht sichtbar) nach unten ins Innere der festen Fahrzeugstruktur 2 bewegt.

Die Steuerung des Verlaufs der Geschwindigkeit erfolgt mittels einer nicht dargestellten Steuerelektronik über die Steuerung der Linearantriebe, wobei die Geschwindigkeit zu Beginn der Bewegung zunimmt und gegen Ende der Bewegung abnimmt.

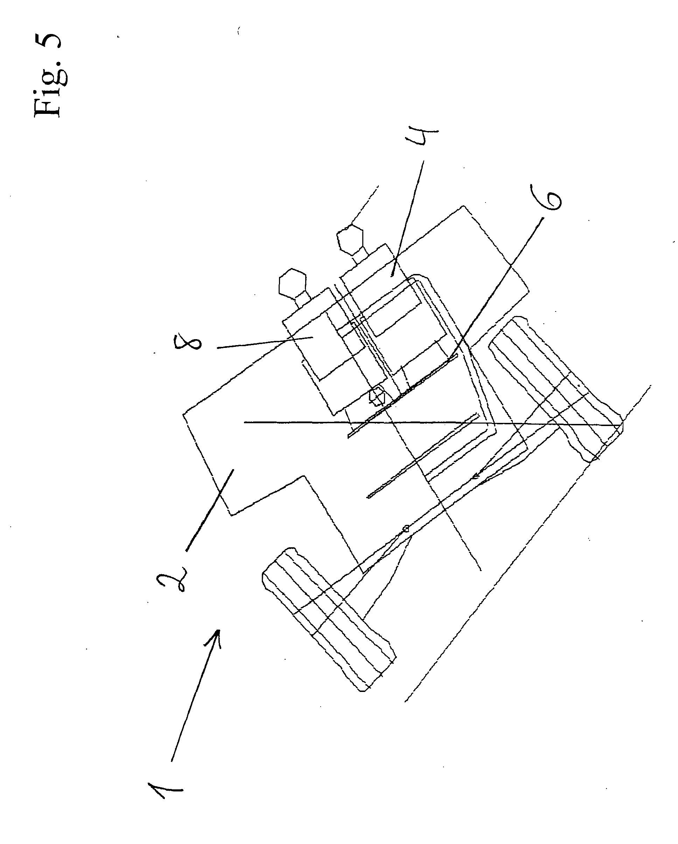

Fig. 5 zeigt das geneigte Fahrzeug 1 im umkippenden Zustand in einer schematischen Darstellung zu einem Zeitpunkt t₁. In diesem Zustand liegt der Wert der Neigung über einem vorgegeben Schwellwert und eine nicht dargestellte Steuerelektronik hat aus den von nicht dargestellten Neigungswinkelerfassungsmitteln gelieferten Werten diesen Zustand erkannt und veranlasst die Bewegung der Sitze 4 und 8. Die Bewegungsmittel beginnen, die Plattform 6, auf welcher die Sitze 4 und 8 montiert sind, ins Innere der festen Fahrzeugstruktur 2 zu bewegen.

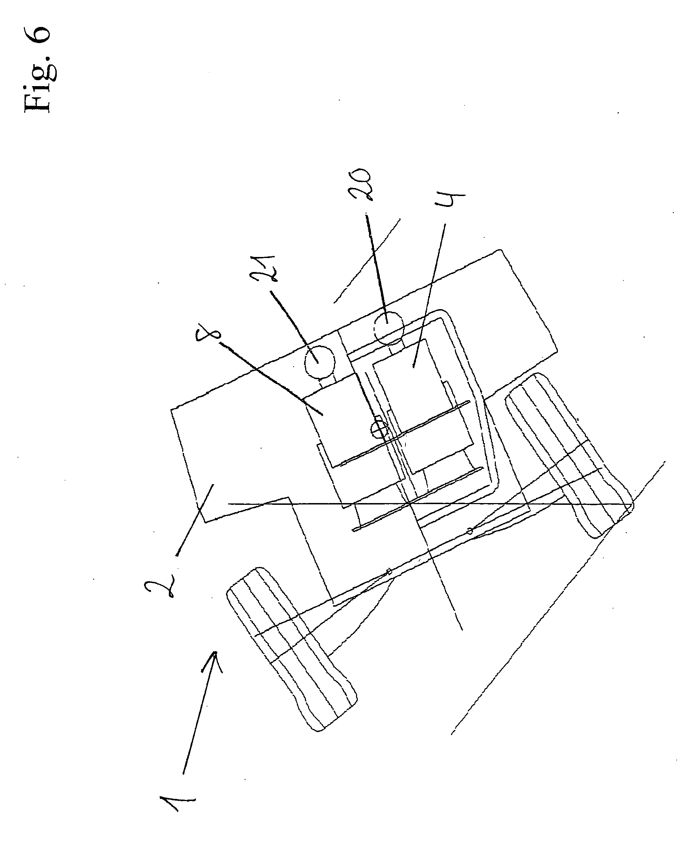

Fig. 6 zeigt das Fahrzeug 1 im umkippenden Zustand in einer schematischen Darstellung zu einem Zeitpunkt t₂ > t₁. Noch bevor das Fahrzeug 1 auf der Seite liegt, sind die Sitze 4 und 8 derart bewegt worden, dass sich die Köpfe der Personen 20 und 21, die auf den Sitzen 4 und 8 sitzen, vollständig im Inneren der festen Fahrzeugstruktur 2 befinden. Die Personen sind hierbei mittels eines Vier-Punkt-Gurtsystems mit dem Sitz verbunden.

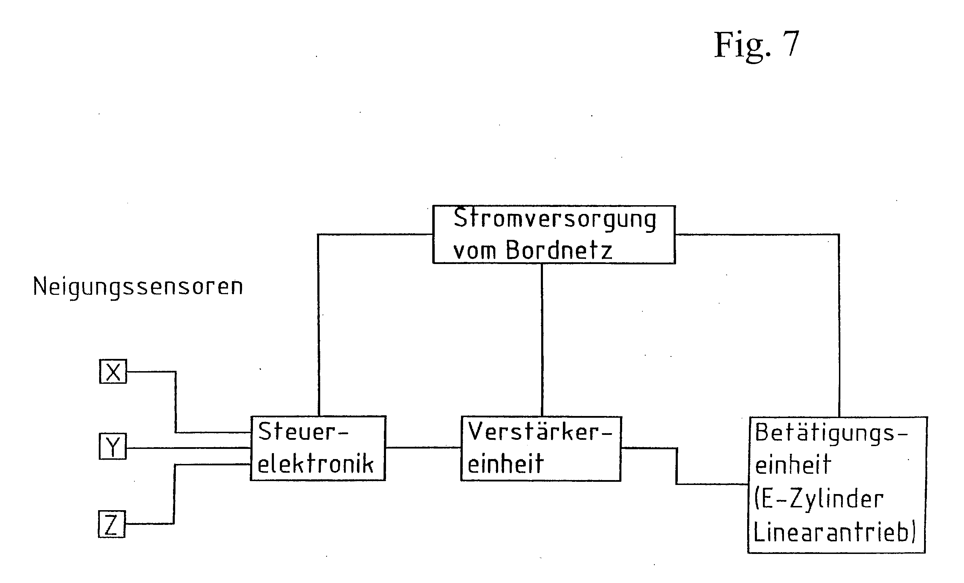

Fig. 7 zeigt ein Blockschaltbild des Verfahrens bei Verwendung von elektrischen Linearantrieben als Bewegungsmittel. Die Neigungssensoren nehmen die Bewegungen des Fahrzeugs in X, Y und Z Richtung auf. Die gemessenen Wert werden an die Steuereinheit übergeben. Die Steuereinheit verarbeitet die Signale. Beim Kippen oder Überrollen des Fahrzeugs gibt die Steuereinheit ein elektrisches Signal an die Verstärkereinheit. Die Verstärkereinheit gibt das Signal für den oder die elektrischen Zylinder bzw. die Linearmotoren frei. Die Steuereinheit, die Verstärkereinheit und die Betätigungseinheit werden direkt aus dem Bordnetz des Fahrgestells gespeist.

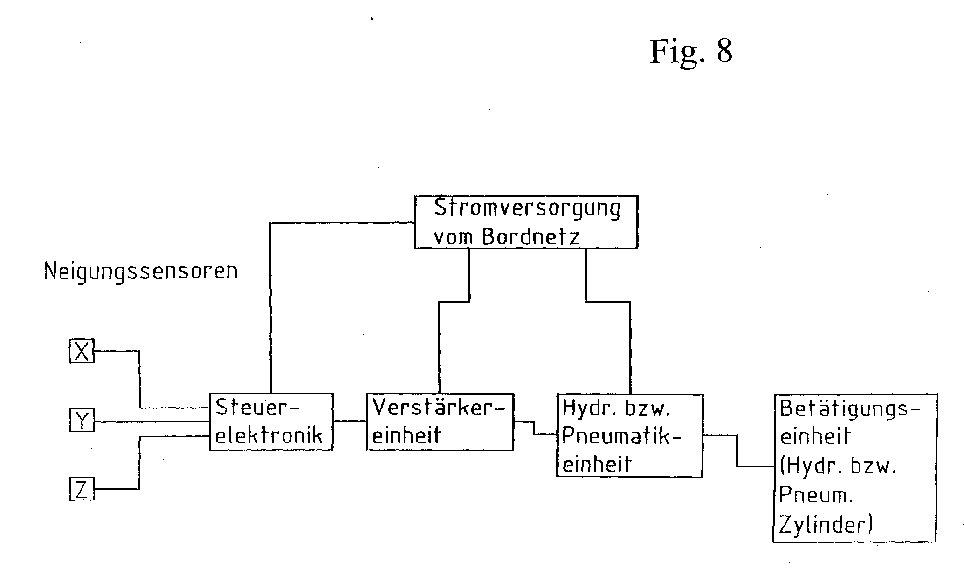

Fig. 8 zeigt ein Blockschaltbild des Verfahrens bei Verwendung einer Hydraulik- bzw. Pneumatikeinheit als Bewegungsmittel. Die Neigungssensoren nehmen die Bewegungen des Fahrzeugs in X, Y und Z Richtung auf. Die gemessenen Werte werden an die Steuereinheit übergeben. Die Steuereinheit verarbeitet die Signale. Beim Kippen oder Überrollen des Fahrzeugs gibt die Steuereinheit ein elektrisches Signal an die Verstärkereinheit. Die Verstärkereinheit gibt das elektrische Signal für die Ventile in der Hydraulik- bzw. Pneumatikeinheit frei. Die Hydraulik- bzw. Pneumatikeinheit speist die Zylinder der Betätigungseinheit. Die Steuereinheit, die Verstärkereinheit und die Hydraulik- bzw. Pneumatikeinheit werden direkt aus dem Bordnetz des Fahrgestells mit Spannung versorgt.

## Patentansprüche

1. Verfahren zum Personenschutz an einem Fahrzeug (1), insbesondere an einem Fahrschul-Fahrzeug, mit einer festen Fahrzeugstruktur (2) und einem auf der Fahrzeugstruktur aufgebrachten Aufsatz (3), in dem sich mindestens ein Sitz (4, 8) zumindest teilweise befindet, **dadurch gekennzeichnet, dass** der Neigungswinkel des Fahrzeugs ermittelt wird, und dass der Sitz in Richtung des Inneren der festen Fahrzeugstruktur bewegt wird, wenn der Neigungswinkel einen vorgegebenen Schwellwert übersteigt.

2. Verfahren nach Anspruch 1, **dadurch gekennzeichnet, dass** die Geschwindigkeit der Bewegung des mindestens einen Sitzes (4, 8) zum Ende der Bewegung verringert wird.

3. Vorrichtung zum Personenschutz an einem Fahrzeug (1), insbesondere an einem Fahrschul-Fahrzeug, mit einer festen Fahrzeugstruktur (2) und einem auf der Fahrzeugstruktur aufgebrachten Aufsatz (3), in dem sich mindestens ein Sitz (4, 8) zumindest teilweise befindet, **dadurch gekennzeichnet, dass** das Fahrzeug Neigungswinkelerfassungsmittel aufweist, welche den Neigungswinkel erfassen, und dass die Vorrichtung Bewegungs-Mittel (9, 10, 11, 12, 13, 14, 15, 16, 17, 18, 19, 24, 25, 26) aufweist, welche den Sitz in Richtung des Inneren der festen Fahrzeugstruktur bewegen, wenn der Neigungswinkel einen vorgegebenen Schwellwert übersteigt.

4. Vorrichtung nach Anspruch 3, **dadurch gekennzeichnet, dass** sie eine Steuerungselektronik umfasst, welche die Geschwindigkeit der Bewegung des mindestens einen Sitzes (4, 8) steuert.

5. Vorrichtung nach Anspruch 3 oder 4, **dadurch gekennzeichnet, dass** die Bewegungs-Mittel mindestens eine Konstruktion (10, 24) nach dem Scherenprinzip umfassen.

6. Vorrichtung nach Anspruch 5, **dadurch gekennzeichnet, dass** die mindestens eine Konstruktion (10, 24) nach dem Scherenprinzip elektrisch oder von einem insbesondere hydraulisch oder pneumatisch betriebenen Zylinder (17) angetrieben wird.

7. Vorrichtung nach einem der Ansprüche 3 bis 6, **dadurch gekennzeichnet, dass** der mindestens eine Sitz (4, 8) auf einer Plattform (6) angeordnet ist.

8. Vorrichtung nach einem der Ansprüche 3 bis 7, **dadurch gekennzeichnet, dass** die Bewegungs-Mittel mindestens einen elektrischen Linearantrieb (18, 19, 25, 26) umfassen.

9. Vorrichtung nach Anspruch 7 oder 8, **dadurch gekennzeichnet, dass** jede Ecke der Plattform (6) mit einem Bewegungs-Mittel (18, 19, 25, 26) verbunden ist.

10. Vorrichtung nach einem der Ansprüche 3 bis 9, **dadurch gekennzeichnet, dass** der mindestens eine Sitz (4, 8) mit einem Vier-Punkt-Gurtsystem ausgestattet ist.
